Europäisches Patentamt

European Patent Office

Office européen des brevets

(11) Veröffentlichungsnummer: **0 281 894 B1**

# (12) EUROPÄISCHE PATENTSCHRIFT

(45) Veröffentlichungstag der Patentschrift: **09.12.92**

(21) Anmeldenummer: **88103033.2**

(22) Anmeldetag: **01.03.88**

(51) Int. Cl.⁵: **C03C 17/36**

(54) **Verfahren zum Herstellen einer vorgespannten und/oder gebogenen Glasscheibe mit Silberschicht, danach hergestellte Glasscheibe sowie deren Verwendung.**

(30) Priorität: **13.03.87 DE 3708256**
**20.05.87 DE 3716860**

(43) Veröffentlichungstag der Anmeldung:
**14.09.88 Bulletin 88/37**

(45) Bekanntmachung des Hinweises auf die Patenterteilung:
**09.12.92 Bulletin 92/50**

(84) Benannte Vertragsstaaten:
**AT BE CH DE ES FR GB GR IT LI LU NL SE**

(56) Entgegenhaltungen:
**EP-A- 229 921      EP-A- 233 003**
**EP-A- 0 120 408    DE-A- 3 307 661**
**FR-A- 1 271 584    GB-A- 826 754**
**GB-A- 2 186 001    LU-A- 55 954**
**US-A- 3 944 440**

(73) Patentinhaber: **FLACHGLAS AKTIENGESELL-SCHAFT**
**Otto-Seeling-Promenade 10-14**
**W-8510 Fürth(DE)**

(72) Erfinder: **Groth, Rolf, Dr.**
**Holzstrasse 218**
**W-4630 Bochum 6(DE)**
Erfinder: **Paul, Thomas, Dr.**
**Flottmannstrasse 112**
**W-4690 Herne 1(DE)**

(74) Vertreter: **Goddar, Heinz J., Dr. et al**
**FORRESTER & BOEHMERT Franz-Joseph-Strasse 38**
**W-8000 München 40(DE)**

EP 0 281 894 B1

## Beschreibung

Die Erfindung betrifft ein Verfahren zum Herstellen einer vorgespannten und/oder gebogenen, infrarotreflektierenden Glasscheibe aus Natron-Kalk-Silikatglas, bei dem auf wenigstens eine Seite eines transparenten Glasträgers eine Silberschicht und auf deren dem Glasträger abgewandte Seite mindestens eine Entspiegelungsschicht aus Metalloxid aufgebracht werden und ein thermischer Vorspann- und/oder Biegeprozeß bei einer Temperatur von 580°C bis 680°C, vorzugsweise 600°C bis 650°C, durchgeführt wird, sowie die Verwendung einer danach hergestellten Glasscheibe.

Dünne Silberschichten zeichnen sich durch eine hohe Lichtdurchlässigkeit in Verbindung mit hoher Infrarot-Reflexion und hoher elektrischer Leitfähigkeit aus. Sie haben aus diesem Grunde verschiedene Anwendungen gefunden, z.B. zur Verbesserung der Wärmedämmung von Fensterscheiben und als heizbare Beschichtung von Windschutzscheiben bei Kraftfahrzeugen. Die selektiven Filtereigenschaften von Silberschichten können noch weiter verbessert werden, wenn auf der dem Glasträger abgewandten Seite der Silberschicht eine Entspiegelungsschicht aus einem dielektrischen Material mit einem Brechungsindex ≥ 1,7, z.B. eine Metalloxidschicht, angeordnet ist. Darüberhinaus kann zwischen dem Glasträger und der Silberschicht eine weitere dielektrische Schicht vorgesehen sein, die als Haftvermittler dient und bei Ausbildung als Viertelwellenlängenschicht auch zusätzlich noch einen Entspiegelungseffekt bringt. Im Rahmen der gattungsgemäßen Maßnahmen liegt es daher, daß die Silberschicht beidseitig in jeweils eine oder mehrere Metalloxidschichten eingebettet wird. Weiterhin können zwischen dem Glasträger und der Silberschicht sowie den Metalloxidschichten und der Silberschicht Metall-, Metalloxid- oder Metallegierungsschichten , z.B. aus Chrom, Nickel, Titan, Chromnickellegierungen, angeordnet werden, um beispielsweise die Filtereigenschaften, die Haftfestigkeit und die Korrosionsbeständigkeit zu verbessern (s. DE-OS 21 44 242, DE-OS 33 07 661, DE-PS 33 16 548, EP-PS 35 906 und EP-OS 104 870).

In vielen Anwendungsfällen ist es notwendig, den Glasträger thermisch vorzuspannen, z.B. zur Erhöhung der mechanischen Stabilität, zur Vermeidung von Hitzesprüngen und zur Reduzierung des Verletzungsrisikos bei Scheibenbruch. Für die Erzeugung der thermischen Vorspannung werden die in den genannten Anwendungen fast ausschließlich verwendeten Scheiben aus Natron-Kalk-Silikatglas in Luft rasch auf eine Temperatur oberhalb der Transformationstemperatur des Glases aufgeheizt und anschließend abgeschreckt. Die für den Vorspannprozeß benötigten Temperaturen liegen im Bereich von 580°C bis 680°C, vorzugsweise 600°C und 650°C. Der gleiche Temperaturbereich wird auch benötigt, wenn die von der Glasherstellung her planen Scheiben einem Biegeprozeß unterzogen werden, um gebogene Scheiben zu erhalten. Solche Scheiben finden insbesondere Anwendung als heizbare Windschutz- und Rückwandscheiben bei der Verglasung von Kraftfahrzeugen. Dabei wird die mit der elektrisch leitenden Silberbeschichtung versehene Scheibe über eine Polyvinylbutyralfolie mit einer weiteren Scheibe verbunden, wobei sich die Beschichtung auf der der Verbundfolie zugewandten Seite befindet, versehen mit den entsprechenden Stromzuführungsschienen im Randbereich gegenüberliegender Seiten für die Zuführung der elektrischen Energie für die Beheizung.

Das Aufbringen der vorgenannten Schichten erfolgt bislang regelmäßig nach abgeschlossenem Vorspann- bzw. Biegeprozeß, wobei in aller Regel Vakuum-Beschichtungsverfahren zur Anwendung kommen; aus der DE-OS 36 28 057 ist es zwar schon bekannt, Glasscheiben mit einem wärmebeständigen Edelmetallschichtsystem zu versehen, bei dem eine äußere Metalloxidschicht nicht-reaktiv augestäubt wird. Hierzu ist es jedoch notwendig, ein Oxidtarget für das Aufbringen der äußeren Metalloxidschicht zu verwenden, was neben einem erhöhten Aufwand bei der Targetherstellung den Nachteil nur verhältnismäßig geringer Sputterraten hat. Hinzu kommt, daß diese Vorgehensweise mit einer Verschlechterung der Lichtdurchlässigkeit gegenüber gattungsgemäß hergestellten Silberschichtsystenmen verbunden ist.

Die Verfahrensweise, die Beschichtung im Anschluß an den Vorspann- bzw. Biegeprozeß durchzuführen, wie sie beim gattungsgemäßen Verfahren üblich ist, hat verschiedene Nachteile gegenüber einer Arbeitsweise, bei der zunächst die Beschichtung aufgebracht und anschließend der Vorspann- bzw. Biegeprozeß durchgeführt würde. So können im ersteren Falle nur Festmaße beschichtet werden, da vorgespannte Scheiben bekanntlich nicht zerschnitten werden können. Für die Beschichtungstechnik ist es dagegen viel günstiger, Einheitsmaße, insbesondere die Bandmaße der Glaserzeugung des Floatprozesses, zu beschichten. Im letzteren Falle lassen sich bei Vakuum-Beschichtungen die Probleme einer gleichmäßigen Schichtdicke viel leichter und einfacher lösen, als wenn Festmaße mit entsprechenden Lücken zwischen den einzelnen Scheiben im Beschichtungsfeld beschichtet werden. Hinzu kommt, daß der Transport solcher Einheitsmaße durch die Beschichtungsanlage weniger aufwendig ist, als wenn Einzelstücke verschiedener Abmessungen transportiert werden müssen.

Ein weiterer Nachteil besteht darin, daß durch die hohen Temperaturen des Vorspann- bzw. Biegeprozesses Verunreinigungen auf der Glasoberfläche häufig mit ihr eine so feste Bindung eingehen, daß sie bei der anschließenden Oberflächenreinigung vor Durchführung des Beschichtungsprozesses nicht mehr so weit entfernt werden können, wie das für den anschließenden Beschichtungsprozeß notwendig ist. Das führt zu einer störenden Verschlechterung der Beschichtungsqualität.

Im Falle der Beschichtung von gebogenen Scheiben sind naturgemäß die Probleme, eine ausreichende Schichtgleichmäßigkeit zu bekommen, besonders groß, weil sich Winkel und Abstand zu den Beschichtungsquellen durch die Krümmung der Scheiben zusätzlich verändern. Hinzu kommt, daß der Aufwand für Vakuum-Beschichtungsanlagen für die Beschichtung gebogener Scheiben wesentlich größer als der für die Beschichtung planer Scheiben ist, da Eingangs- und Ausgangsschleusen sowie Schleusen zwischen verschiedenen Beschichtungsstationen wesentlich breiter als beim Beschichten von planem Glas ausgebildet werden müssen.

Aus den genannten Gründen hat eine Verfahrensweise, bei welcher planes Glas, insbesondere in Form von Einheitsmaßen, beschichtet und anschließend - insbesondere nach Herstellung der Festmaße durch Auftrennen - vorgespannt bzw. gebogen wird, beträchtliche Vorteile. Diese Vorgehensweise ist jedoch bei Beschichtungen der eingangs genannten Art nicht möglich, weil es durch die mit dem Biege- bzw. Vorspannprozeß verbundene Wärmebelastung zu störenden Schichtveränderungen kommt. Die Scheiben bekommen ein mattes und teilweise fleckiges Aussehen. Diese Schichtveränderungen führen dazu, daß auffallendes Licht gestreut wird. Der Streulichtpegel ist dabei so intensiv, daß er beispielsweise die Durchsicht durch eine derartige Scheibe erheblich beeinträchtigt, wenn diese Scheibe schräg von Sonnenlicht bestrahlt wird und ein Beobachter von der anderen Seite hindurchschaut (Milchscheibeneffekt). Unter derartigen Verhältnissen kann es schon zu einer störenden Beeinträchtigung der Durchsicht führen, wenn nur etwa 1 % der Sonnenstrahlung diffus gestreut wird. Darüberhinaus verliert auch die Beschichtung zum Teil ihre selektiven Filtereigenschaften. Die Lichtdurchlässigkeit, das Infrarotreflexionsvermögen und die elektrische Leitfähigkeit verschlechtern sich.

Der Erfindung liegt daher die Aufgabe zugrunde, das gattungsgemäße Verfahren dahingehend weiterzubilden, daß die mit der Beschichtung des Glasträgers erst nach dem Vorspann-bzw. Biegeprozeß verbundenen Nachteile vermieden und ohne die Gefahr von Schichtveränderungen die erforderlichen Beschichtungsmaßnahmen bereits vor dem Vorspann- und/oder Biegeprozeß durchgeführt werden können, wobei die so hergestellten Glasscheiben hohe Lichtdurchlässigkeit, hohe Reflexion für Wärmestrahlung und hohe elektrische Leitfähigkeit aufweisen sollen. Für eine Verwendung als flächig heizbare Fahrzeugverbundglasscheibe sollen erfindungsgemäß hergestellte Glasscheiben dabei besonders hohe Lichttransmission, elektrische Leitfähigkeit sowie möglichst niedrige Außenreflexion aufweisen. Für eine Verwendung in Bauverglasungen soll darüberhinaus der Schichtaufbau möglichst einfach gestaltet werden können.

Erfindungsgemäß wird diese Aufgabe in Weiterbildung des gattungsgemäßen Verfahrens dadurch gelöst, daß auf den im wesentlichen planen Glasträger zumindest eine Silberschicht und eine äußere Schicht aus einem Metall oder einer Metallegierung aufgebracht werden und daß danach der Vorspann-und/oder Biegeprozeß durchgeführt wird, bei dem sich die äußere Schicht unter Volumenvergrößerung in eine im wesentlichen absorptionsfreie, zumindest einen Teil der Entspiegelungsschicht bildende Metalloxidschicht mit einem Brechungsindex ≥1,7 umwandelt.

Vorzugsweise wird die äußere Schicht in einer Dicke von mindestens 5 nm aufgebracht.

Dabei kann vorgesehen sein, daß für die äußere Schicht ein derartiges Material verwendet wird, daß ihr Brechungsindex nach dem Oxidieren bei mindestens 2,0 liegt.

Eine weitere Ausführungsform der Erfindung schlägt vor, daß als Material für die äußere Schicht Zinn, Zink, Cer, Zirkon, Wismut, Hafnium, Aluminium, Indium, Titan, Tantal oder Legierungen dieser Metalle verwendet werden.

Dabei kann insbesondere vorgesehen sein, daß als Material für die äußere Schicht Titan, Tantal oder Legierungen dieser Metalle verwendet werden.

Die Erfindung schlägt ferner vor, daß auf die Silberschicht vor dem Aufbringen der äußeren Schicht wenigstens eine Zwischenschicht in einer Dicke von wenigstens 2 nm aufgebracht wird.

Dabei kann so vorgegangen werden, daß die Zwischenschicht als Metalloxidschicht aufgebracht wird.

Die Zwischenschicht wird vorzugsweise in einer Dicke von mindestens 8 nm und mit einem Brechungsindex ≥1,7 aufgebracht, so daß sie zusammen mit der äußeren Schicht als Entspiegelungsschicht wirkt.

Eine weitere Ausführungsform der Erfindung sieht vor, daß die an die Silberschicht auf der dem Glasträger abgewandten Seite anschließende Entspiegelungsbeschichtung in einer Gesamtdicke von - nach der Oxidation - 20 nm bis 70 nm hergestellt wird.

Nach der Erfindung kann insbesondere vorgesehen sein, daß die an die Silberschicht auf der dem Glasträger abgewandten Seite anschließende Entspiegelungsbeschichtung in einer Gesamtdicke von - nach der Oxidation - 30 nm bis 60 nm hergestellt wird.

Die Erfindung schlägt ferner vor, daß auf den Glasträger vor dem Aufbringen der Silberschicht mindestens eine metalloxidische Entspiegelungsschicht, vorzugsweise mit einer Gesamtdicke von 20 - 70 nm, insbesondere 30 - 60 nm, aufgebracht wird.

Die Erfindung sieht vorzugsweise vor, daß die Silberschicht in einer Dicke von 5 bis 30 nm aufgebracht wird.

Eine weitere Ausführungsform der Erfindung sieht vor, daß dem Ausgangsmaterial für die Herstellung der Silberschicht in geringen Mengen mindestens ein anderes Metall, wie Nickel, zur Verbesserung der Schichteigenschaften zugesetzt wird.

Das erfindungsgemäße Verfahren kann auch dadurch gekennzeichnet sein, daß auf mindestens einer Seite der Silberschicht mindestens eine dünne Zusatzschicht aus einem die Haftfestigkeit verbessernden Metall oder einer Metallegierung angeordnet wird.

In Weiterbildung dieser Ausführungsform kann vorgesehen sein, daß für die Zusatzschicht Chrom, Nickel, Titan oder Legierungen dieser Metalle verwendet werden.

Eine besonders bevorzugte Ausführungsform der Erfindung sieht vor, daß das Beschichten des Glasträgers durch Vakuum-Beschichtung, insbesondere Magnetron-Kathodenzerstäubung, erfolgt.

Gegenstand der Erfindung ist ferner die Verwendung einer nach dem erfindungsgemäßen Verfahren hergestellten Glasscheibe als Einzelscheibe einer Verbundglasscheibe, insbesondere für Fahrzeugverglasungen, mit an die Verbundfolie angrenzender Beschichtung, wobei die Beschichtung mindestens eine glasseitige Entspiegelungsschicht, eine Silberschicht sowie eine aus einer Metalloxidzwischenschicht sowie einer äußeren Schicht aus TiO$_2$, Ta$_2$O$_5$ oder Mischungen dieser Oxide gebildete äußere Entspiegelungsschicht aufweist.

Schließlich wird die Verwendung einer nach dem erfindungsgemäßen Verfahren hergestellten Einfachglasscheibe als Einzelscheibe einer Isolierglaseinheit für Bauverglasungen vorgeschlagen, wobei die Beschichtung mindestens eine glasseitige Entspiegelungsschicht, eine Silberschicht sowie eine äußere Entspiegelungsschicht aus Ta$_2$O$_5$ aufweist.

Überraschenderweise gelingt es bei der erfindungsgemäßen Vorgehensweise, die sonst auftretenden störenden Schichtveränderungen auszuschalten. Es hat sich dabei gezeigt, daß für die Wirkung der äußeren Metall- oder Metallegierungsschicht bereits Dicken von etwa 5 nm ausreichend sind.

Die Ursachen für die stabilisierende Wirkung der sich im Zuge des Biege-/Vorspannprozesses in eine Oxidschicht umwandelnden äußeren Metall- oder Metallegierungsschicht sind nicht im einzelnen bekannt. Untersuchungen unter dem Mikroskop an einem vor der Wärmebehandlung aufgebrachten herkömmlichen Schichtsystem haben ergeben, daß nach dem Vorspann- bzw. Biegeprozeß die Entspiegelungsschicht auf der Silberschicht aufgebrochen ist und eine Rißstruktur aufweist. Das wird möglicherweise ausgelöst durch eine bei der vorliegenden Wärmebelastung erfolgende Agglomeratbildung der Silberschicht. Hierfür können die unterschiedlichen Ausdehnungskoeffizienten des Glasträgers und der Silberschicht Ursache sein. Unterschiede im Ausdehnungskoeffizienten zwischen dem Glasträger und der Silberschicht führen nämlich zu Druckspannungen in der Silberschicht und fördern den Prozeß der Agglomeratbildung. Die Wirkung der äußeren Metall- oder Metallegierungsschicht könnte wie folgt erklärbar sein. Von entscheidender Bedeutung für das Verfahren nach der Erfindung ist die Auswahl der für die äußere Schicht verwendeten Materialien: es werden nur solche Metalle verwendet, bei denen die beim Biegen oder Vorspannen erfolgende Umwandlung in ein im wesentlichen absorptionsfreies, einen Brechungsindex ≥ 1,7 aufweisendes Oxid mit einer Volumenvergrößerung verbunden ist. Vermutlich werden durch diese Volumenvergrößerung in der Silberschicht Zugspannungen induziert, die den oben erwähnten Druckspannungen entgegenwirken. Überraschenderweise ist die stabilisierende Wirkung auch dann vorhanden, wenn die äußere Schicht nicht unmittelbar, sondern unter Zwischenschaltung weiterer Schichten auf der Silberschicht angeordnet ist. Es sei aber darauf hingewiesen, daß es sich bei der obenaufgeführten Erklärung nur um eine Vermutung handelt. Weitergehende Aussagen sind naturgemäß bei so komplizierten Wechselwirkungen nicht möglich.

Wie schon erwähnt, ist es in manchen Fällen sinnvoll, zwischen der Silberschicht und der äußeren Schicht eine Zwischenschicht aufzubringen. Die Funktion einer solchen Zwischenschicht, die eine Schichtdicke von wenigstens 2 nm aufweisen sollte, kann darin bestehen, eine Diffusion von Atomen aus der äußeren Metall- oder Metallegierungsschicht in die Silberschicht und damit eine unerwünschte Legierungsbildung zu verhindern. Daneben kann hierdurch gegebenenfalls eine weitere Verbesserung der Wärmebeständigkeit des Schichtsystems erreicht werden. Wird die Zwischenschicht als Metalloxidschicht in einer Dicke von wenigstens etwa 8 nm und mit einem Brechungsindex ≥1,7 hergestellt, so trägt sie zusammen mit der entsprechend dünner auszulegenden äußeren Schicht zur Entspiegelung der Silberschicht bei. Auf diese Weise wird eine weitere Optimierung der optischen Eigenschaften des Schichtsystems sowie eine Anpassung an vorgegebene optischen Daten, wie z. B. die Farbwirkung der erfindungsgemäß hergestellten Glasscheibe, ermöglicht.

Als geeignet für die äußere Metall- bzw. Metallegierungsschicht haben sich vor allem die Metalle Zinn, Zink, Cer, Zirkon, Wismut, Hafnium, Aluminium, Indium, Titan, Tantal oder Legierungen dieser Metalle erwiesen. Besonders bevorzugt sind die Metalle Titan und Tantal und Legierungen dieser Metalle, deren Oxide einen hohen Brechungsindex oberhalb von 2,2 aufweisen. Das ist insbesondere bei Anwendungen vorteilhaft, bei denen die beschichtete Scheibe über eine Polyvinylbutyralfolie mit einer zweiten Glasscheibe zu einer Verbundglaseinheit verbunden ist. In diesem Fall grenzt im Gegensatz zu anderen möglichen Anwendungen die Beschichtung nicht an Luft, sondern an die Verbundfolie mit dem höheren Brechungsindex 1,5. Das führt dazu, daß für die Entspiegelungsschicht ein höherer Brechungsindex benötigt wird, wenn optimale Entspiegelung erreicht werden soll. In diesen Fällen sind Schichten aus Titan und Tantal wegen der hohen Brechungsindices der im Zuge des Biege- oder Vorspannprozesses gebildeten Oxide besonders geeignet.

Die Gesamtdicke der an der dem Glasträger abgewandten Seite der Silberschicht angeordneten Entspiegelungsschicht hängt vom Brechungsindex der verwendeten Materialien und ferner davon ab, für welchen Wellenlängenbereich des sichtbaren Spektralgebiets die Entspiegelungsschicht optimal angepaßt werden soll. Die benötigten Schichtdicken liegen im Bereich von 20 nm bis 70 nm, vorzugsweise zwischen 30 nm und 60 nm, auf die Schichtdicke nach der Oxidation der äußeren Schicht bezogen, wobei zu beachten ist, daß die Ausgangs-Metallschicht durch die Oxidation dicker wird, und zwar im allgemeinen um rund einen Faktor 1,5 bis 3,0. Die ggfs. vorhandene glasseitige Entspiegelungsschicht wird vorzugsweise ebenfalls in einer Dicke von 30 bis 60 nm aufgebracht.

Die Dicke der Silberschicht ist abhängig von den Werten der gewünschten Infrarotreflexion und der elektrischen Leitfähigkeit. Erfindungsgemäß liegt sie im Bereich von 5 bis 30 nm. Den Ausgangsmaterialien für die Silberschicht können in geringen Mengen andere Metalle, wie z. B. Nickel, zugesetzt werden, die bei der Herstellung den Schichtbildungsprozeß günstig beeinflussen, d. h. insbesondere die Gefahr von Agglomeratbildung weiter reduzieren (s. DE-OS 33 07 661 und DE-OS 35 03 851).

An dieser Stelle sei betont, daß die erfindungsgemäße Verfahrensführung sich besonders vorteilhaft bei der Herstellung von Glasscheiben auswirkt, bei denen die Silberschicht zur flächigen Beheizung eingesetzt werden soll und bei denen es auf eine möglichst hohe Lichttransmision ankommt. Insbesondere eignet sich das Verfahren also zur Herstellung von heizbaren Kfz-Windschutzscheiben. Es wurde nämlich beobachtet, daß die elektrische Leitfähigkeit der Silberschicht durch die Wärmebehandlung eine bemerkenswerte Steigerung erfährt, und zwar um bis zu 100 %. Erfindungsgemäß hergestellte Glasscheiben weisen also wesentlich günstigere elektrische Daten auf als nach dem Stand der Technik hergestellte Glasscheiben, bei denen das äußerlich gleiche Schichtsystem erst nach der Wärmebehandlung aufgebracht wurde. Anders herum wird es durch die erfindungsgemäße Verfahrensweise möglich, den gleichen Schichtwiderstand mit Hilfe einer deutlich dünneren Silberschicht einzustellen, so daß bei gleicher Heizleistung ein höherer Lichttransmissionsgrad der Glasscheibe erreicht werden kann.

Die in bevorzugter Ausführungsform bei dem erfindungsgemäßen Verfahren vorgesehene Maßnahme, zwischen dem Glasträger und der Silberschicht sowie ggfs. zwischen der Silberschicht und der daran auf der dem Glasträger abgewandten Seite anschließenden Entspiegelungsschicht dünne Metall- oder Metallegierungsschichten, insbesondere aus Chrom, Nickel, Titan oder Chromnickellegierungen, anzuordnen, um vor allem die Schichthaftung zu verbessern, ist aus der DE-OS 21 44 242 an sich bekannt. Zwischen der Silberschicht und der Zwischenschicht eine dünne Metallschicht oder eine Metalloxidschicht vorzusehen, um eine Schädigung der Silberschicht durch reaktive MAGNETRON-Zerstäubung zu verhindern, wie es in der EP-OS 104 870 bzw. der DE-PS 33 16 548 an sich beschrieben ist, kann darüberhinaus von Nutzen sein.

Die Herstellung der erfindungsgemäßen Beschichtung erfolgt bevorzugt durch Vakuum-Beschichtung. Die Schichten können dabei durch Verdampfen aus widerstandsgeheizten Verdampfervorrichtungen oder aber auch durch Elektronenstrahlverdampfung aufgebracht werden. Ferner eignen sich Kathodenzerstäubung als Gleichstrom- oder Niederfrequenzzerstäubung, insbesondere aber auch Hochfrequenz- und MAGNETRON-Zerstäubung. Die Metall- bzw. Metallegierungsschichten können dabei entweder durch Verdampfung oder Zerstäubung in neutraler Atmosphäre hergestellt werden. Für die Herstellung der Oxidschichten eignet sich das Verfahren der reaktiven Verdampfung, insbesondere aber das Verfahren der reaktiven Zerstäubung. Besonders wirtschaftlich ist dabei das Verfahren der reaktiven MAGNETRON-Zerstäubung, bei welchem entsprechende Metall- bzw. Metallegierungstargets in einer Atmosphäre, welche u.a. Sauerstoff enthält, zerstäubt werden.

Die erfindungsgemäße Vorgehensweise, die der die äußere Schicht beim Vorspannen bzw. Biegen in die entsprechende Metalloxidschicht umgewandelt wird, bringt auch verfahrensmäßig beim Vakuumbeschichten beträchtliche Vorteile gegenüber dem gattungsgemäßen Verfahren mit sich, bei dem die entsprechende Oxidschicht unmittelbar hergestellt wird. Bei Vakuum-Beschichtungsverfahren ist nämlich der Aufwand zur Herstellung einer Oxidschicht beträchtlich höher als zur Herstellung einer metallischen Schicht. So sind beim besonders wirtschaftlichen Verfahren der MAGNETRON-Zerstäubung die Zerstäubungsraten für Metallschichten viel höher als die für Oxidschichten bei reaktiver Zerstäubung der entsprechenden metallischen Targets. Diese Raten unterscheiden sich z.B. im Falle von Titandioxid um mehr als eine Zehnerpotenz. Auch die Probleme, auf großen Flächen eine gleichmäßige Schicht zu erhalten, sind für die Herstellung von Metallschichten einfacher zu lösen als für Metalloxidschichten.

Es sei schließlich noch angemerkt, daß die optischen Eigenschaften erfindungsgemäß hergestellter Glasscheiben durch die Verwendung in der Masse gefärbter Gläser weiter optimiert werden können. Beispielsweise werden aus Sonnenschutzgründen Kfz-Verglasungen häufig rundum aus Grünglas erstellt. Zur Erzielung eines einheitlichen optischen Gesamteindrucks ist es für diesen Fall vorzuziehen, bei Verwendung erfindungsgemäß hergestellter Glasscheiben als Teil der Windschutzscheibe diese ebenfalls in Grünglas auszuführen. Als erwünschter Nebeneffekt wird hierdurch die Außenreflexion weiter vermindert.

Weitere Merkmale und Vorteile der Erfindung ergeben sich aus der nachstehenden Beschreibung, in der Ausführungsbeispiele anhand der schematischen Zeichnung im einzelnen erläutert sind. Dabei zeigt:

Fig. 1 ein erstes Ausführungsbeispiel einer nach dem erfindungsgemäßen Verfahren herstellbaren Glasscheibe im Schnitt senkrecht zur Scheibenebene;

Fig. 2 ein gegenüber Fig. 1 abgewandeltes Ausführungsbeispiel, ebenfalls im Schnitt senkrecht zur Scheibenebene;

Fig. 3 ein gegenüber Fig. 1 und Fig. 2 weiter abgewandeltes Ausführungsbeispiel einer Glasscheibe im Schnitt senkrecht zur Scheibenebene;

Fig. 4 die Transmissions- und Reflexionskurven einer nach Beispiel I hergestellten Glasscheibe; und

Fig. 5 die Transmissions- und Reflexionskurven einer nach Beispiel II hergestellten Glasscheibe.

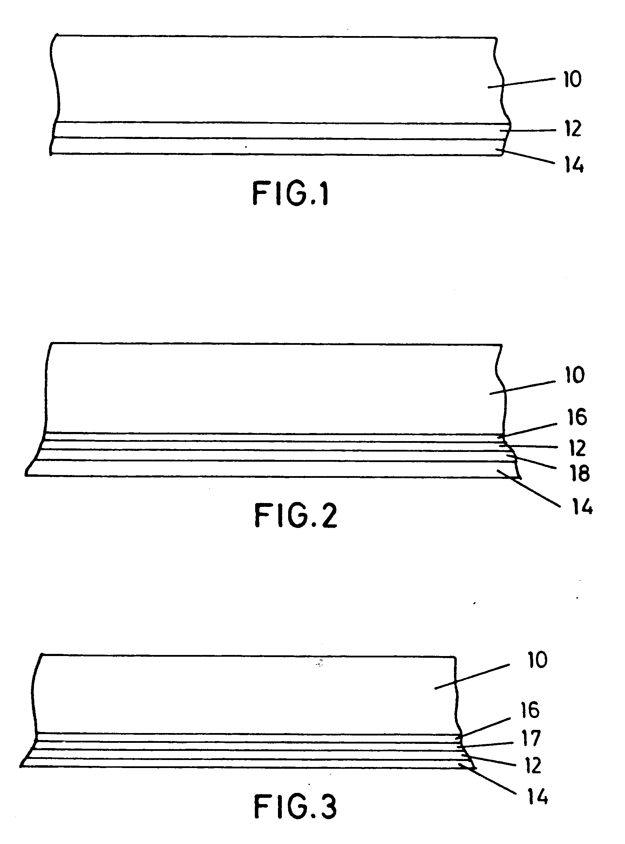

Beim Ausführungsbeispiel gemäß Fig. 1 sind auf einem Glasträger 10 aufeinanderfolgend eine Silberschicht 12 und eine durch Oxidation beim Vorspann- bzw. Biegeprozeß erzeugte Tantaloxidschicht 14 (äußere Schicht) angeordnet.

Beim Ausführungsbeispiel von Fig. 2 befindet sich zwischen dem Glasträger 10 und der Silberschicht 12 eine Entspiegelungsschicht 16 aus $SnO_2$. Auf der dem Glasträger 10 abgewandten Seite schließt an die Silberschicht 12 eine Zwischenschicht 18 aus Sn-dotiertem $In_2O_3$ an, auf die dann die äußere Schicht 14 folgt, die hier aus durch Oxidation von Titan entstandenem $TiO_2$ besteht.

Beim Ausführungsbeispiel von Fig. 3 folgt im Anschluß an den Glasträger 10 zunächst eine Entspiegelungsschicht 16 aus $SnO_2$, darauf eine Haftschicht 17 aus Sn-dotiertem $In_2O_3$, dann die Silberschicht 12 und daran anschließend die äußere Schicht 14, hier aus oxidiertem Tantal ($Ta_2O_5$) bestehend.

Beispiel I:

In einer Vakuum-Beschichtungsanlage, welche mit Beschichtungseinrichtungen für MAGNETRON-Zerstäubung ausgerüstet war, wurden auf eine Floatglasscheibe im Format 40 cm × 40 cm und einer Dicke von 4 mm nacheinander folgende Schichten aufgebracht:

- eine mit Zinn dotierte $In_2O_3$-Schicht von 32 nm Dicke durch reaktive Zerstäubung eines Targets der Zusammensetzung In (90) Sn(10) bei einem Druck von $3,5 \cdot 10^{-3}$mbar in einer Argon-Sauerstoff-Stickstoff-Atmosphäre mit 40 Vol% Sauerstoff- und 30 Vol% Stickstoffanteil
- eine Silberschicht von 9 nm Dicke durch Zerstäubung eines Silbertargets in Argon-Atmosphäre bei einem Druck von $2,5 \cdot 10^{-3}$mbar
- eine Tantal-Schicht von 14 nm Dicke durch Zerstäubung eines Tantal-Targets in Argon-Atmosphäre bei einem Druck von $1,3 \cdot 10^{-3}$mbar.

Die so beschichtete Glasscheibe wies einen Transmissionsgrad im Bereich hoher Augenempfindlichkeit um 550 nm von 0,25 auf. Sie wurde anschließend in einer Metallkassette in einem Ofen in Luft auf 620°C aufgeheizt und nach Herausnahme der Kassette aus dem Ofen schnell abgekühlt. Die Wärmebehandlung entsprach in etwa den Bedingungen, wie sie beim Vorspannen und Biegen vorliegen.

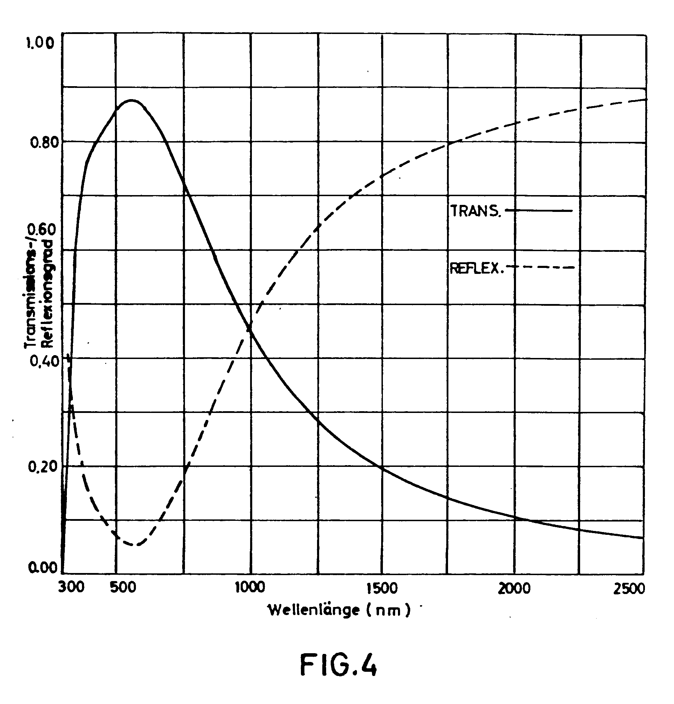

Nach dieser Wärmebehandlung hatte sich durch die Oxidation der Tantalschicht der Transmissionsgrad im Bereich um 550 nm auf 0,87 erhöht. Die beschichtete Scheibe war ohne erkennbare Flecke und zeigte bei Beleuchtung mit einer Projektionslampe kein störendes Streulicht. In Fig. 4 sind die Ergebnisse der Spektralmessung in Transmission und Reflexion wiedergegeben. Das Maximum der Transmission liegt im Bereich hoher Augenempfindlichkeit um 550 nm. Zu längeren Wellenlängen nimmt die Transmission ab und ist im nahen Infraroten sehr klein. Die Reflexionskurve zeigt den umgekehrten Verlauf. Insgesamt ergeben sich sehr gute Filtereigenschaften.

Gegenbeispiel I a

Es wurde beim Aufbringen der Beschichtung wie in Beispiel I verfahren mit dem Unterschied, daß anstelle der Tantalschicht eine $Ta_2O_5$-Schicht der Dicke 32 nm aufgebracht wurde. Das erfolgte durch reaktives Zerstäuben eines Tantaltargets bei einem Druck von 1,6 · $10^{-3}$mbar in einer Argon-Sauerstoffatmosphäre mit 25 Vol% Sauerstoff. Die beschichtete Scheibe war ohne Streulicht und wies einen Transmissionsgrad im Bereich hoher Augenempfindlichkeit um 550 nm von 0,86 auf. Sie wurden anschließend wie in Beispiel I dem gleichen Heiz-Zyklus ausgesetzt. Danach zeigte die Scheibe bei Beleuchtung mit einer Projektionslampe starkes Streulicht. Sie war für die genannten Anwendungen nicht geeignet.

Beispiel II:

In der gleichen Vakuum-Beschichtungsanlage wie in Beispiel I wurden auf eine Floatglasscheibe im Format 40 cm × 40 cm und einer Dicke von 2mm nacheinander folgende Schichten aufge-bracht:

- eine $SnO_2$-Schicht von 30 nm Dicke durch reaktive Zerstäubung eines Zinntargets bei einem Druck von 4 · $10^{-3}$mbar in einer Argon-Sauerstoffatmosphäre mit 50 Vol% Sauerstoffanteil
- eine mit Zinn dotierte $In_2O_3$-Schicht von 3,5 nm Dicke durch Zerstäubung eines Targets der Zusammensetzung In (90) Sn (10) bei einem Druck von 3,5 · $10^{-3}$mbar in einer Argon-Sauerstoffatmosphäre mit 40 Vol% Sauerstoffanteil
- eine Silberschicht von 9 nm Dicke durch Zerstäubung eines Silbertargets in Argon-Atmosphäre bei einem Druck von 2,5 · $10^{-3}$mbar
- eine mit Zinn dotierte $In_2O_3$-Schicht von 2 nm Dicke durch Zerstäubung eines In (90) Sn(10)-Targets in einer Argon-Sauerstoffatmosphäre mit 20 Vol% Sauerstoffanteil bei einem Druck von 1,5 · $10^{-3}$mbar
- eine Titan-Schicht von 17 nm Dicke durch Zerstäubung eines Titan-Targets in Argon-Atmosphäre bei einem Druck von 1,5 · $10^{-3}$mbar

Die so beschichtete Scheibe wies einen Transmissionsgrad von 0,30 auf bei einer Wellenlänge von 550 nm. Anschließend wurde die beschichtete Scheibe dem gleichen Temperaturzyklus wie in Beispiel I ausgesetzt. Sie wies danach keine erkennbaren Flecken auf. Der Transmissionsgrad bei 550 nm betrug 0,86.

Diese Scheibe wurde so mit einer zweiten Floatglasscheibe der Dicke 2mm durch eine Polyvinylbutyralfolie von 0,76 mm Dicke zu einer Verbundglasscheibe verbunden, daß die beschichtete Seite der ersten Floatglasscheibe der Verbundfolie zugewandt war.

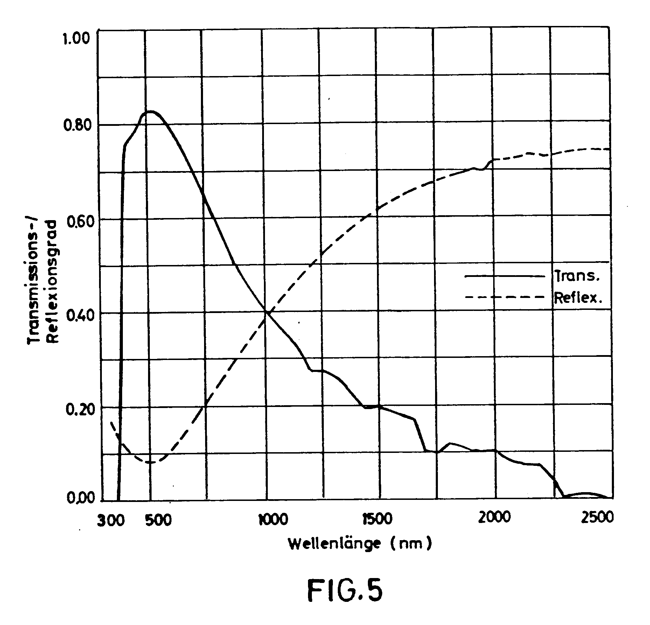

In Fig. 5 sind die Ergebnisse der Spektralmessung von Transmission und Reflexion der Verbundglasscheibe wiedergegeben. Im Bereich hoher Augenempfindlichkeit um 550 nm wird ein Transmissionsgrad von 0,82 erreicht. Zu langen Wellenlängen nimmt die Transmission kontinuierlich ab und ist im nahen Infraroten sehr klein. Die Reflexionskurve zeigt den umgekehrten Verlauf, insbesondere ist der Reflexionsgrad im Bereich hoher Augenempfindlichkeit mit 0,08 sehr klein. Eine derartige Verbundglasscheibe ist vor allem für Kfz-Anwen-dungen wie heizbare Windschutzscheiben hervorra-gend geeignet.

Gegenbeispiel II a

Es wurden beim Aufbringen der Beschichtung wie in Beispiel II verfahren mit dem Unterschied, daß anstelle der Titanschicht eine $TiO_2$-Schicht von 30 nm aufgebracht wurde: Das erfolgte durch reaktive Zerstäubung eines Titantargets bei einem Druck von 2· $10^{-3}$mbar in einer Argon-Sauerstof-fatmosphäre mit 40 Vol% Sauerstoff. Die beschichtete Scheibe wies einen Transmissionsgrad im Bereich um 550 nm von 0,85 auf und war ohne störende Trübungserscheinungen. Sie wurde anschließend wie die Scheibe in Beispiel I dem gleichen Temperaturzyklus ausgesetzt. Danach wies die Scheibe ein fleckiges Aussehen auf und zeigte, nachdem sie wie in Beispiel II zu einer Verbundglasscheibe verarbeitet worden war, bei Beleuchtung mit einer Projektionslampe einen hohen Streulichtanteil.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in den verschiedenen Ausführungsformen wesentlich sein.

**Patentansprüche**

1. Verfahren zum Herstellen einer infrarotreflektierenden Glasscheibe aus Natron-Kalk-Silikatglas, bei dem auf wenigstens eine Seite eines transparenten Glasträgers eine Silberschicht und auf deren dem Glasträger abgewandte Seite eine Metalloxidbeschichtung aufgebracht werden, dadurch gekennzeichnet, daß zur Herstellung einer vorgespannten und/oder gebogenen Glasscheibe auf den planen Glasträger zumindest eine Silberschicht und eine äußere Schicht aus einem Metall oder einer Metallegierung aufgebracht werden und daß danach bei einer Temperatur von 580°C bis 680°C, vorzugsweise 600°C bis 650°C, der Vorspann- und/oder Biegeprozeß durchgeführt wird, bei dem sich die äußere Schicht unter Volumenvergrößerung in eine im wesentlichen absorptionsfreie Metalloxid-Entspiegelungsschicht mit einer Gesamtdicke von - nach der Oxidation - 20 nm bis 70 nm umwandelt, wobei für die äußere Schicht ein derartiges Material verwendet wird, daß ihr Brechungsindex nach dem Oxidieren höher als 1,7 liegt.

2. Verfahren zum Herstellen einer infrarotreflektierenden Glasscheibe aus Natron-Kalk-Silikatglas, bei dem auf wenigstens eine Seite eines transparenten Glasträgers eine Silberschicht und auf deren dem Glasträger abgewandte Seite eine Metalloxidbeschichtung aufgebracht werden, dadurch gekennzeichnet, daß zur Herstellung einer vorgespannten und/oder gebogenen Glasscheibe auf den planen Glasträger zunächst zumindest eine Silberschicht, dann wenigstens eine Zwischenschicht in einer Dikke von wenigstens 2 nm und anschließend eine äußere Schicht aus einem Metall oder einer Metallegierung aufgebracht werden und daß danach bei einer Temperatur von 580°C bis 680°C, vorzugsweise 600°C bis 650°C, der Vorspann- und/oder Biegeprozeß durchgeführt wird, bei dem sich die äußere Schicht unter Volumenvergrößerung in eine im wesentlichen absorptionsfreie, einen Teil einer Entspiegelungsbeschichtung mit einer Gesamtdikke von - nach der Oxidation - 20 nm bis 70 nm, einschließlich der Zwischenschicht, bildende Metalloxidschicht umwandelt, wobei für die äußere Schicht ein derartiges Material verwendet wird, daß ihr Brechungsindex nach dem Oxidieren bei mindestens 1,7 liegt.

3. Verfahren nach Anspruch 1, dadurch gekennzeichnet, daß als Material für die äußere Schicht Zinn, Zink, Cer, Zirkon, Wismut, Hafnium, Indium, Titan, Tantal oder Legierungen dieser Metalle verwendet werden.

4. Verfahren nach Anspruch 2, dadurch gekennzeichnet, daß die Zwischenschicht als Metalloxidschicht aufgebracht wird.

5. Verfahren nach Anspruch 4, dadurch gekennzeichnet, daß die Zwischenschicht in einer Dikke von mindestens 8 nm und mit einem Brechungsindex > 1,7 aufgebracht wird, so daß sie zusammen mit der äußeren Schicht nach deren Oxidation als Entspiegelungsschicht wirkt.

6. Verfahren nach einem der Ansprüche 2, 4 oder 5, dadurch gekennzeichnet, daß als Material für die äußere Schicht Zinn, Zink, Cer, Zirkon, Wismut, Hafnium, Aluminium, Indium, Titan, Tantal oder Legierungen dieser Metalle verwendet werden.

7. Verfahren nach einem der vorangehenden Ansprüche, dadurch gekennzeichnet, daß die äußere Schicht in einer Dicke von mindestens 5 nm aufgebracht wird.

8. Verfahren nach einem der vorangehenden Ansprüche, dadurch gekennzeichnet, daß für die äußere Schicht ein derartiges Material verwendet wird, daß ihr Brechungsindex nach dem Oxidieren bei mindestens 2,0 liegt.

9. Verfahren nach Anspruch 8, dadurch gekennzeichnet, daß als Material für die äußere Schicht Titan, Tantal oder Legierungen dieser Metalle verwendet werden.

10. Verfahren nach einem der vorangehenden Ansprüche, dadurch gekennzeichnet, daß die an die Silberschicht auf der dem Glasträger abgewandten Seite anschließende Entspiegelungsbeschichtung in einer Gesamtdicke von - nach der Oxidation - 30 nm bis 60 nm hergestellt wird.

11. Verfahren nach einem der vorangehenden Ansprüche, dadurch gekennzeichnet, daß auf den Glasträger vor dem Aufbringen der Silberschicht mindestens eine metalloxidische Entspiegelungsschicht mit einem Brechungsindex > 1,7, vorzugsweise mit einer Gesamtdicke von 20 - 70 nm, aufgebracht wird.

12. Verfahren nach Anspruch 11, dadurch gekennzeichnet, daß die zwischen dem Glasträger und der Silberschicht angeordnete Beschichtung mit einer Gesamtdicke von 30 bis 60 nm hergestellt wird.

13. Verfahren nach einem der vorangehenden Ansprüche, dadurch gekennzeichnet, daß die Silberschicht in einer Dicke von 5 bis 30 nm aufgebracht wird.

14. Verfahren nach einem der vorangehenden Ansprüche, dadurch gekennzeichnet, daß dem Ausgangsmaterial für die Herstellung der Silberschicht in geringen Mengen mindestens ein anderes Metall, wie Nickel, zur Verbesserung der Schichteigenschaften zugesetzt wird.

15. Verfahren nach einem der vorangehenden Ansprüche, dadurch gekennzeichnet, daß auf mindestens einer Seite der Silberschicht mindestens eine dünne Zusatzschicht aus einem die Haftfestigkeit verbessernden Metall oder einer Metallegierung angeordnet wird.

16. Verfahren nach Anspruch 15, dadurch gekennzeichnet, daß für die Zusatzschicht Chrom, Nickel, Titan oder Legierungen dieser Metalle verwendet wird/werden.

17. Verfahren nach einem der vorangehenden Ansprüchen, dadurch gekennzeichnet, daß das Beschichten des Glasträgers durch Vakuum-Beschichtung, insbesondere Magnetron-Kathodenzerstäubung, erfolgt.

18. Verwendung der nach dem Verfahren nach einem der vorangehenden Ansprüche hergestellten Glasscheibe als Einzelscheibe einer Verbundglasscheibe, insbesondere für Fahrzeugverglasungen, mit an die Verbundfolie angrenzender Beschichtung, wobei die Beschichtung mindestens eine glasseitige Entspiegelungsschicht, eine Silberschicht sowie eine aus einer Metalloxidzwischenschicht sowie einer äußeren Schicht aus $TiO_2$, $Ta_2O_5$ oder Mischungen dieser Oxide gebildete äußere Entspiegelungsschicht aufweist.

19. Verwendung der nach dem Verfahren nach einem der Ansprüche bis 1 bis 17 hergestellten Glasscheibe als Einzelscheibe einer Isolierglaseinheit für Bauverglasungen, wobei die Beschichtung mindestens eine glasseitige Entspiegelungsschicht, eine Silberschicht sowie eine äußere Entspiegelungsschicht aus $Ta_2O_5$ aufweist.

## Claims

1. A method of producing an infra-red reflecting glass pane from soda-lime-silicate glass, in which a silver coating is applied to at least one side of a transparent glass substrate and a metal oxide coating is applied to the side of the silver coating remote from the glass substrate, characterised in that in order to produce a toughened and/or curved glass pane at least one silver coating and an outer coating of a metal or metal alloy are applied to the flat glass substrate and in that the toughening and/or bending process is/are then carried out at a temperature of 580°C to 680°C, preferably 600°C to 650°C, in which toughening and/or bending process the outer coating changes, with an increase in volume, into a substantially absorption-free metal oxide antireflection coating having a total thickness of - after oxidation - 20 nm to 70 nm, the material used for the outer coating being such that its refractive index after oxidation is higher than 1.7.

2. A method of producing an infra-red reflecting glass pane from soda-lime-silicate glass, in which a silver coating is applied to at least one side of a transparent glass substrate and a metal oxide coating is applied to the side of the silver coating remote from the glass substrate, characterised in that in order to produce a toughened and/or curved glass pane at least one silver coating and then at least one intermediate coating in a thickness of at least 2 nm and then an outer coating of a metal or a metal alloy are applied to the flat glass substrate and in that the toughening and/or bending process is/are then carried at a temperature of 580°C to 680°C, preferably 600°C to 650°C, in which toughening and/or bending process the outer coating changes, with an increase in volume, into a substantially absorption-free metal oxide coating which forms part of an antireflection coating having a total thickness of - after oxidation - 20 nm to 70 nm, inclusive of the intermediate coating, the material used for the outer coating being such that its refractive index after oxidation is at least 1.7.

3. A method according to claim 1, characterised in that the material for the outer coating is tin, zinc, cerium, zirconium, bismuth, hafnium, indium, titanium, tantalum or alloys of these metals.

4. A method according to claim 2, characterised in that the intermediate coating is applied in the form of a metal oxide coating.

5. A method according to claim 4, characterised in that the intermediate coating is applied in a thickness of at least 8 nm and with a refractive index above 1.7, so that together with the outer coating after oxidation thereof it acts as an anti-reflection coating.

6. A method according to any one of claims 2, 4 or 5, characterised in that the material used for the outer coating is tin, zinc, cerium, zirconium, bismuth, hafnium, aluminium, indium, titanium, tantalum, or alloys of these metals.

7. A method according to any one of the preceding claims, characterised in that the outer coating is applied in a thickness of at least 5 nm.

8. A method according to any one of the preceding claims, characterised in that the material used for the outer coating is such that its refractive index after oxidation is at least 2.0.

9. A method according to claim 8, characterised in that the material used for the outer coating is titanium, tantalum or alloys of these metals.

10. A method according to any one of the preceding claims, characterised in that the anti-reflection coating adjoining the silver coating on the side remote from the glass substrate is made in a total thickness of - after oxidation - 30 nm to 60 nm.

11. A method according to any one of the preceding claims, characterised in that at least one metal-oxide anti-reflection coating having a refractive index above 1.7 is applied, preferably with a total thickness of 20 - 70 nm, to the glass substrate before application of the silver coating.

12. A method according to claim 11, characterised in that the coating disposed between the glass substrate and the silver coating is made in a total thickness of 30 to 60 nm.

13. A method according to any one of the preceding claims, characterised in that the silver coating is applied in a thickness of from 5 to 30 nm.

14. A method according to any one of the preceding claims, characterised in that at least one other metal, such as nickel, for improving the coating properties, is added in small quantities to the raw material for the production of the silver coating.

15. A method according to any one of the preceding claims, characterised in that at least one thin additional coating of a metal which improves the adhesion strength or of a metal alloy is disposed on at least one of the side of the silver coating.

16. A method according to claim 15, characterised in that chromium, nickel, titanium or alloys of these metals is/are used for the additional coating.

17. A method according to any one of the preceding claims, characterised in that coating of the glass substrate is effected by vacuum coating, more particularly magnetron cathode sputtering.

18. Use of the glass pane made by the method according to any one of the preceding claims as on individual pane in a laminated glass window, more particularly for vehicle glazing, having a coating adjoining the laminating film, the coating comprising at least one anti-reflection coating adjacent the glass, a silver coating, and an outer anti-reflection coating formed from a metal oxide intermediate coating and an outer coating of $TiO_2$, $Ta_2O_5$ or mixtures of these oxides.

19. Use of the glass pane made by the method according to any one of claims 1 to 17 as an individual pane in an insulating glass unit for building glazing, the coating comprising at least one anti-reflection coating adjacent the glass, a silver coating and an outer anti-reflection coating of $Ta_2O_5$.

## Revendications

1. Procédé pour fabriquer une glace en verre au silicate soude - chaux réfléchissant l'infrarouge, dans lequel on dépose une couche d'argent sur au moins une face d'un support en verre transparent et un revêtement d'oxyde métallique sur le côté de la couche situé à l'opposé du support en verre, caractérisé en ce que, pour fabriquer une glace trempée et/ou cintrée, on dépose sur le support en verre plan au moins une couche d'argent et une couche extérieure en un métal ou un alliage métallique et en ce qu'on effectue ensuite le processus de trempe et/ou de cintrage à une température de 580°C à 680°C, de préférence de 600°C à 650°C, au cours duquel la couche extérieure est convertie, en subissant un accroissement de volume, en une couche antireflet métaloxyde, essentiellement non-absorbante, ayant une épaisseur totale - après l'oxydation - de 20 nm à 70 nm, en utilisant pour la couche extérieure un matériau tel que son indice de réfraction soit supérieur à 1,7 après l'oxydation.

2. Procédé pour fabriquer une glace en verre au silicate soude-chaux réfléchissant l'infrarouge, dans lequel on dépose une couche d'argent sur au moins une face d'un support en verre transparent et un revêtement d'oxyde métallique sur le côté de la couche située à l'opposé du support en verre, caractérisé en ce que, pour fabriquer une glace trempée et/ou cintrée, on dépose sur le support en verre plan d'abord au moins une couche d'argent, ensuite au moins une couche intermédiaire ayant une épaisseur d'au moins 2 nm et puis une couche extérieure en un métal ou un alliage métallique et en ce qu'on effectue ensuite le processus de trempe et/ou de cintrage à une température de 580°C à 680°C, de préférence de 600°C à 650°C, au cours duquel la couche extérieure est convertie, en subissant un accroissement de volume, en une couche métal-oxyde, essentiellement non absorbante, constituant une partie d'un revêtement antireflet ayant une épaisseur totale - après l'oxydation - de 20 nm à 70 nm, y compris la couche intermédiaire, en utilisant pour la couche extérieure un matériau tel que son indice de réfraction soit supérieur à 1,7 après l'oxydation.

3. Procédé selon la revendication 1, caractérisé en ce qu'on utilise en tant que matériau pour la couche extérieure l'étain, le zinc, le cérium, le zirconium, le bismuth, le hafnium, l'indium, le titane, le tantale ou des alliages de ces métaux.

4. Procédé selon la revendication 2, caractérisé en ce qu'on dépose la couche intermédiaire sous forme de couche d'oxyde métallique.

5. Procédé selon la revendication 4, caractérisé en ce qu'on dépose la couche intermédiaire avec une épaisseur d'au moins 8 nm et un indice de réfraction > 1,7, de manière qu'elle agisse, conjointement avec la couche extérieure après son oxydation, comme une couche antireflet.

6. Procédé selon l'une des revendications 2, 4 ou 5, caractérisé en ce qu'on utilise en tant que matériau pour la couche extérieure l'étain, le zinc, le cérium, le zirconium, le bismuth, le hafnium, l'aluminium, l'indium, le titane, le tantale ou des alliages de ces métaux.

7. Procédé selon l'une des revendications précédentes, caractérisé en ce qu'on dépose la couche extérieure avec une épaisseur d'au moins 5 nm.

8. Procédé selon l'une des revendications précédentes, caractérisé en ce qu'on utilise pour la couche extérieure un matériau tel que son indice de réfraction après oxydation soit au moins égal à 2,0.

9. Procédé selon la revendication 8, caractérisé en ce qu'on utilise pour la couche extérieure le titane, le tantale ou des alliages de ces métaux.

10. Procédé selon l'une des revendications précédentes, caractérisé en ce que le revêtement antireflet, faisant suite à la couche d'argent du côté situé à l'opposé du support en verre, est réalisé avec une épaisseur totale - après l'oxydation - de 30 nm à 60 nm.

11. Procédé selon l'une des revendications précédentes, caractérisé en ce qu'on dépose sur le support en verre, avant le dépôt de la couche d'argent, au moins une couche antireflet, à base d'oxyde métallique, ayant un indice de réfraction > 1,7, de préférence avec une épaisseur totale de 20 à 70 nm.

12. Procédé selon la revendication 11, caractérisé en ce qu'on réalise avec une épaisseur totale de 30 à 60 nm le revêtement disposé entre le support en verre et la couche d'argent.

13. Procédé selon l'une des revendications précédente, caractérisé en ce qu'on dépose la couche d'argent avec une épaisseur de 5 à 30 nm.

14. Procédé selon l'une des revendications précédentes, caractérisé en ce qu'on ajoute au matériau de départ pour la réalisation de la couche d'argent, en faibles quantités, au moins un autre métal, tel que le nickel, pour améliorer les propriétés de la couche.

15. Procédé selon l'une des revendications précédentes, caractérisé en ce qu'on dispose, au moins d'un côté de la couche d'argent, au moins une couche supplémentaire mince en un métal ou un alliage métallique améliorant la force d'adhérence.

16. Procédé selon la revendication 15, caractérisé en ce qu'on utilise pour la couche supplémentaire le chrome, le nickel, le titane ou des alliages de ces métaux.

17. Procédé selon l'une des revendications précédentes, caractérisé en ce qu'on effectue le revêtement du support en verre par revêtement sous vide, notamment par pulvérisation cathodique au magnétron.

18. Utilisation de la glace fabriquée à l'aide du procédé selon l'une des revendications précédentes en tant que glace élémentaire d'une glace composée, notamment pour des vitrages de véhicule, avec le revêtement attenant à la feuille de liaison, le revêtement comportant au moins une couche antireflet côté verre, une couche d'argent ainsi qu'une couche antireflet extérieure constituée d'une couche intermédiaire en oxyde métallique et d'une couche extérieure en $TiO_2$, $Ta_2O_5$ ou en mélanges de ces oxydes.

19. Utilisation de la glace fabriquée à l'aide du procédé selon l'une des revendications 1 à 17 en tant que glace élémentaire d'une unité en verre isolant pour des vitrages de constructions, le revêtement comportant au moins une couche antireflet côté verre, une couche d'argent ainsi qu'une couche antireflet extérieure en $Ta_2O_5$.

FIG.1

FIG.2

FIG.3

FIG.4

FIG.5